(19) Europäisches Patentamt
European Patent Office
Office européen des brevets

(11) Veröffentlichungsnummer: **0 374 462 A2**

# (12) EUROPÄISCHE PATENTANMELDUNG

(21) Anmeldenummer: **89120849.8**

(51) Int. Cl.[5]: **C08G 75/02**

(22) Anmeldetag: **10.11.89**

(30) Priorität: **23.11.88 DE 3839441**

(43) Veröffentlichungstag der Anmeldung:
**27.06.90 Patentblatt 90/26**

(84) Benannte Vertragsstaaten:
**BE DE FR GB IT**

(71) Anmelder: **BAYER AG**
**D-5090 Leverkusen 1 Bayerwerk(DE)**

(72) Erfinder: **Schmidt, Manfred, Dr.**
**Erich-Klausener-Strasse 37**
**D-4150 Krefeld(DE)**
Erfinder: **Arlt, Wolfgang, Dr.**
**Schönwasserstrasse 230c**
**D-4150 Krefeld(DE)**
Erfinder: **Tresper, Erhard, Dr.**
**Moerser Strasse 394**
**D-4150 Krefeld(DE)**
Erfinder: **Rüsseler, Wolfgang, Dr.**
**Waldhofstrasse 121**
**D-4150 Krefeld(DE)**

## (54) Verfahren zur Herstellung von hochmolekularen, gegebenfalls verzweigten Polyarylensulfiden.

(57) Die Erfindung betrifft ein Verfahren zur Herstellung von hochmolekularen, gegebenenfalls verzweigten, Polyarylensulfiden, mit einem verminderten Gehalt an extrahierbaren oligomeren Bestandteilen. Sie werden in einem polaren organischen Lösungsmittel durch Umsetzung von Alkalisulfiden und/oder Alkalihydrogensulfiden mit Dihalogenaromaten hergestellt.

EP 0 374 462 A2

## Verfahren zur Herstellung von hochmolekularen, gegebenenfalls verzweigten, Polyarylensulfiden

Die Erfindung betrifft ein Verfahren zur Herstellung von hochmolekularen, gegebenenfalls verzweigten, Polyarylensulfiden, vorzugsweise Polyphenylensulfid (PPS), mit einem verminderten Gehalt an extrahierbaren oligomeren Bestandteilen. Sie werden in einem polaren organischen Lösungsmittel durch Umsetzung von Alkalisulfiden und/oder Alkalihydrogensulfiden mit Dihalogenaromaten hergestellt.

Polyarylensufide (PAS) und ihre Herstellung sind bekannt (z.B. US-PS 3 354 129, EP-A 171 021).

PAS sind hochtemperaturbeständige Kunststoffe. Sie werden vorzugsweise auf dem Elektro-/Elektronik-Sektor eingesetzt. Derartige Anwendungen stellen hohe Anforderungen an die Reinheit und Beständigkeit eines Kunststoffs.

Die unter Abspaltung von Alkalihalogeniden gebildeten Polyarylensulfide können extrahierbare niedermolekulare Oligomeren enthalten.

Polyarylensulfide mit erhöhten Anteilen extrahierbarer Oligomere können Nachteile bei der Spritzgußverarbeitung, beispielsweise bei der Herstellung Glasfaser- oder Mineral-gefüllter Compounds zeigen, beispielsweise Oberflächenstörungen an Formkörpern. Bei der thermoplastischen Verarbeitung zu Formkörpern können sogenannte Schwimmhäute am Rande der Formkörper, infolge einer erhöhten Schmelzfließfähigkeit der oligomeren Anteile in der thermoplastischen Masse, entstehen. Außerdem kann ein erhöhter Anteil an reaktiven Endgruppen wie SH- und Cl-Endgruppen im Polymer vorhanden sein, wodurch bei der thermoplastischen Verarbeitung verstärkte HCl-Ausgasung und ein erhöhter Elektrolytgehalt resultieren können.

Aus der EP-A 215 259 ist bekannt, niedermolekulare Oligomere zu extrahieren (z.B. mit Methylenchlorid).

Aus der EP-A 240 016 ist bekannt, aus dem heißen Reaktionsgemisch zunächst abgeschiedenes festes Polymer abzutrennen und anschließend mit dem gleichen Lösungsmittel, das bei der Reaktion verwendet wurde bei Temperaturen von mindestens 50 °C mehrmals zu waschen. Oligomere Anteile können dabei extrahiert werden.

Es wurde nun ein Verfahren zur Herstellung von Polyarylensulfiden, vorzugsweise Polyphenylsulfid, gefunden, bei dem Polymere erhalten wurden, die weniger als 2,1 Gew.-% mit Methylenchlorid extrahierbarer oligomerer Anteile haben. Sie haben ein einheitliches Molekulargewicht (geringe Uneinheitlichkeit der Molgewichtsverteilungskurve) und enthalten weniger als 5 ppm anorganisches Chlor.

Gegenstand der Erfindung ist ein Verfahren zur Herstellung von hochmolekularen, gegebenenfalls verzweigten, Polyarylensulfiden, vorzugsweise Polyphenylensulfiden, aus

a) einem oder mehreren Dihalogen(hetero)aromaten der Formeln (I) und/oder (II),

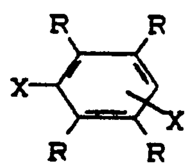 (I), 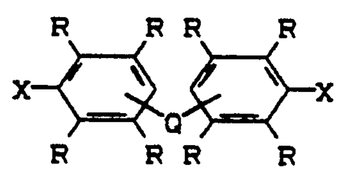 (II),

in denen

X für Halogen wie Chlor oder Brom steht,

R gleich oder verschieden sind und Wasserstoff, $C_1$-$C_{20}$-Alkyl, $C_4$-$C_{20}$-Cycloalkyl, $C_6$-$C_{24}$-Aryl, $C_7$-$C_{24}$-Alkylaryl und $C_7$-$C_{24}$-Arylalkyl sein können, wobei zwei zueinander ortho-ständige Reste R zu einem aromatischen oder heterocyclischen Ring mit bis zu drei Heteroatomen wie N, O oder S verknüpft sein können,

und

Q für eine chemische Bindung, für zweibindige Gruppen wie -Ar-, -O-, -S-, -SO-, $SO_2$-, $-(CR_2)_m-$, -CO-, -CO-Ar-CO-, -CO-NH-, -CO-NH-Ar-NH-CO-steht,

wobei R die oben angegebene Bedeutung hat, Ar einen zweibindingen $C_6$-$C_{24}$-Aromaten bedeutet, m eine ganze Zahl von 1 bis 24 ist

und

b) 0 bis 5 Mol-%, bevorzugt 0 bis 1,25 Mol-%, bezogen auf die Summe der Dihalogenaromaten der Formel (I) und/oder (II), eines Tri- oder Tetrahalogenaromaten der Formel (III),

$ArX_n$ (III),

in welcher

Ar ein aromatischer oder heterocyclischer Rest mit 6 bis 24 Ringatomen ist, wobei bis zu drei Ring-C-Atomen durch Heteroatome wie N, O, S ersetzt sein können,
X für Halogen wie Brom oder Chlor steht und
n für die Zahlen 3 oder 4 steht,
und

c) 50 bis 100 Mol-% Alkalisulfid wie Natrium- oder Kaliumsulfid und 0 bis 50 Mol-% Alkalihydrogensulfid wie Natrium- oder Kaliumhydrogensulfid, wobei das molare Verhältnis von (a + b) : c im Bereich von 0,75:1 bis 1,15:1, vorzugsweise 0,90:1 bis 1,1:1 liegt,

d) in einem organischen Lösungsmittel, gegebenenfalls unter Mitverwendung von Katalysatoren und/oder Cosolventien, dadurch gekennzeichnet, daß das molare Verhältnis von c) zu dem organischen Lösungsmittel d) im Bereich von 1:1,9 bis 1:1,0, vorzugsweise im Bereich von 1:1,8 bis 1:1,3 liegt, daß die Umsetzung durch Vermischen von wasserhaltigem Alkalisulfid und/oder Alkalihydrogensulfid-Lösungen mit Lösungen der Dihalogenaromaten in einem organischen Lösungsmittel bei Temperaturen oberhalb 212 °C erfolgt, der Wassergehalt der Reaktionslösung 0,02 Gew.-% nicht überschreitet und nicht umgesetzte Halogenaromaten der Formeln (I), (II) und (III) kontinuierlich oder zum Ende der Reaktion aus dem Reaktionsgemisch entfernt werden.

Beispiele für erfindungsgemäß einsetzbare Dihalogenaromaten der Formel (I) sind 1,4-Dichlorbenzol, 1,4-Dibrombenzol, 1-Brom-4-chlorbenzol, 1,3-Dichlorbenzol, 1,3-Dibrombenzol, 1-Brom-3-chlorbenzol, 2,5-Dichlortoluol, 2,5-Dichlorxylol, 1,4-Dichlor-2-ethylbenzol, 1,4-Dibrom-2-ethylbenzol, 1,4-Dichlor-2,3,5,6-tetramethylbenzol, 1,4-Dichlor-2-cyclohexylbenzol, 2-Benzyl- 1,4-dichlorbenzol, 2,4-Dichlortoluol, 2,4-Dichlorxylol, 2,4-Dichlorcumol, vorzugsweise 1,4-Dichlorbenzol, 1,3-Dichlorbenzol und 2,5-Dichlortoluol.

Beispiele für erfindungsgemäß einsetzbare Dihalogenaromaten der Formel (II) sind 4,4′-Dichlordiphenyl, 4,4′-Dibromdiphenyl, 4,4′-Dichlorbenzophenon, 3,3′-Dichlorbenzophenon, 4,4′-Dichlordiphenylsulfon, 1,4-Bis(4′-chlorbenzoyl)benzol, 1,4-Bis-(4′-chlorbenzoyl)benzol, vorzugsweise 4,4′-Dichlordiphenyl, 4,4′-Dichlordiphenylsulfon und 4,4′-Dichlorbenzophenon.

Die Dihalogenaromaten der Formeln (I) und/oder (II) sind allein oder im Gemisch miteinander einsetzbar.

Beispiele für erfindungsgemäß einsetzbare Tri- oder Tetrahalogenaromaten der Formel (III) sind 1,2,4-Trichlorbenzol, 1,3,5-Trichlorbenzol, 2,2′, 4,4′-Tetrachlordiphenyl, 2,2′, 4,4′-Tetrachlordiphenylsulfid, 1,3,5-Trichlortriazin, 1,2,6-Trichlornaphthalin und Tris(4-chlorphenyl)benzol.

Die Alkalisulfide werden in üblichen Mengen und in üblicher Weise eingesetzt. Es können z.B. Natrium- und Kaliumsulfide eingesetzt werden, die aus den Hydrogensulfiden mit Natrium- oder Kaliumhydroxid hergestellt werden. Sie enthalten 1 bis 9 Mol Wasser pro Mol Sulfid und können als Schmelze, gegebenenfalls gemeinsam mit Katalysatoren, eingesetzt werden.

Als Hydrogensulfide sind Natrium- oder Kaliumhydrogensulfide geeignet. Sie können aus Hydroxiden und Schwefelwasserstoff hergestellt werden. Ebenso ist es möglich, sie aus Sulfiden mit Schwefelwasserstoff herzustellen. Sie können 1 bis 4 Mol Wasser enthalten.

Erfindungsgemäß geeignete organische Lösungsmittel sind aprotische Lösungsmittel, insbesondere N-alkylierte Lactame, beispielsweise N-Methylpyrrolidon, N-Methylpiperidon, N-Isopropyl-pyrrolidon, N-Methylcaprolactam, disubstituierte cyclische Harnstoffe, beispielsweise N,N-Dimethylpyrimidazolidinon (auch N,N-Dimethylpropylenharnstoff genannt), N,N′-Dimethylimidazolidinon. Der Siedepunkt der Lösungsmittel liegt bei 212 °C bis 280 °C, vorzugsweise 212 bis 242 °C. Zur Erreichung des Temperaturbereiches kann die Reaktion unter leichtem Überdruck (bis zu $10^3$ mbar) durchgeführt werden.

Als Cosolventien können beispielsweise N,N-Dialkylcarbonsäureamide von $C_1$-$C_8$-aliphatischen und $C_6$-$C_{12}$-aromatischen Carbonsäuren in einer Menge von 0,02 bis 1 Mol, bezogen auf Sulfid, eingesetzt werden. Vorzugsweise können N,N-Dimethylacetamid, N,N-Diethylacetamid, N,N-Dimethylpropionamid eingesetzt werden.

Als Katalysatoren können für diesen Zweck übliche Substanzen in üblichen Mengen eingesetzt werden, beispielsweise Alkalisalze wie Natrium- oder Kalium-fluoride, -phosphate, -carboxylate oder -capronate in Mengen von 0,02 bis 1,0 Mol Katalysator pro Mol S-Spender.

Bei der Durchführung des Verfahrens wird das Lösungsmittel, die Halogenaromaten der Formel (I) und (II) und/oder (III) gegebenenfalls mit den Katalysatoren und/oder Cosolventien sowie die wasserhaltigen Hydrogensulfide und/oder Sulfide gleichzeitig oder nacheinander der Reaktionsmischung zugeführt. Hierbei ist die Temperatur des Reaktionsgemisches größer als 212 °C. Die Entwässerung erfolgt spontan unter Rückführung der azeotrop abdestillierenden Halogenaromaten der Formel (I), (II), (III). Der Wassergehalt des Reaktionsgemisches beträgt 0 bis 0,02 Gew.-%.

Die Reaktionszeit kann innerhalb einer weiten Spanne variieren. Sie kann von weniger als einer Stunde bis zu mehreren Tagen, vorzugsweise von 1 Stunde bis zu 48 Stunden, besonders bevorzugt 2 bis 18

Stunden betragen. Nicht umgesetzte Halogenaromaten der Formeln (I), (II), und (III) werden aus dem Reaktionsgemisch beispielsweise destillativ abgetrennt.

Die Isolierung der Polyarylensulfide erfolgt beispielsweise durch Abkühlen, Filtern und Waschen des Reaktionsgemisches zunächst mit Ketonen wie Aceton oder Alkoholen wie Methanol, Ethanol oder Isopropanol. Der verbleibende Rückstand wird in Wasser im Verhältnis 1 Teil Rückstand zu 5 bis 20 Teilen Wasser suspendiert, die erhaltene Suspension mit Säuren wie beispielweise Essigsäure, Salzsäure, Phosphorsäure, Schwefelsäure auf pH = 1 - 5 gestellt und anschließend mit Wasser neutral gewaschen.

Die so hergestellten Polyarylensulfide enthalten weniger als 2,1 Gew.-% mit Dichlormethan extrahiertbare oligomere Anteile. Sie haben ein einheitliches Molekulargewicht. Sie enthalten weniger als 5 ppm anorganisches Chlor. Eine sonst übliche oxidative thermische Nachbehandlung und zusätzliche Reinigung durch Extraktionsmethoden kann entfallen.

Die Bestimmung der Schmelzviskositäten der erfindungsgemäß hergestellten Polyarylensulfide als Maß für das Molekulargewicht erfolgt z.B. nach der in der EP-A 14 024 beschriebenen Methode.

Zur Bestimmung der extrahierbaren Anteile werden 100 g der getrockneten Polyarylensulfide zweimal mit je 800 ml (= 1.070 g) Methylenchlorid extrahiert, der Extrakt eingeengt und ausgewogen. Aus dem Extrakt können Reste des bei der Reaktion verwendeten Lösungsmittels und Reste eingesetzter Monomere mittels Gaschromatographie bestimmt werden. Der verbleibende Rest nach Eindampfen des Lösungsmittels und Abzug der Gewichtsmengen von Monomeren ist die extrahierbare Oligomerenmenge.

Die Bestimmung der Molegewichtsverteilung erfolgt z.B. durch Hochtemperatur-Gelpermeationschromatographie einer 0,05 Gew.-%-igen Lösung des Polyarylensulfids in N-Methylcaprolactam bei 185°C an Silicagelsäulen.

Die Uneinheitlichkeit $U_1$ eines Polymers ist definiert als die Differenz zwischen dem Quotienten aus Gewichtsmittelmolskulargewicht $M_w$ und Zahlenmittelmolekulargewicht $M_n$ und der Zahl 1.

$$U_1 = \frac{M_w}{M_n} - 1$$

Die Bestimmung der Gehalte an anorganischem Chlor in den Polyarylensulfiden erfolgt z.B. durch argentometrische Titration.

Die erfindungsgemäß hergestellten Polyarylensulfide können mit anderen anorganischen oder organischen Oligomeren oder Polymeren, mit Pigmenten und Füllstoffen, beispielsweise Ruß, Graphit, Metallpulver, Glaspulver, Quarzmehl, Glimmer, Glas- und Kohlenstoffasern oder Fasern aus anderen anorganischen oder organischen Stoffen, mit üblichen anorganischen Füllstoffen aus der Reihe der Metalloxide oder Metallsulfate, mit anderen Zusatzstoffen, beispielsweise Stabilisatoren und/oder Entformungsmitteln versetzt werden.

Die erfindungsgemäß hergestellten Polyarylensulfide oder ihre Abmischungen können direkt durch Extrusion, Extrusionsblasen, Spritzgießen oder sonst üblichen Verarbeitungstechniken zu Folien, Formkörpern oder Fasern verarbeitet werden. Diese können in üblicher Weise Verwendung finden, z.B. als Automobilteile, Armaturen, Ventile, Kugellagerteile, Elektroteile wie z.B. Schalter, elektronische Tafeln, chemikalienresistente und verwitterungsstabile Teile und Apparateteile wie Pumpengehäuse und Pumpenflügelräder, Ätzbadschalen, Dichtungsringe, Teile von Büromaschinen, Fernmeldeeinrichtungen, Haushaltsgeräten u.s.w.

Vorzugsweise werden die nach dem erfindungsgemäßen Verfahren hergestellten Polymeren zur Ummantelung von elektronischen Bauteilen wie beispielsweise Transistoren, Dioden und Mikrochips verwendet.

<u>Beispiel 1</u>

In einem 4 l Kessel werden unter Stickstoff 1.008,0 g (7,937 Mol) N-Methylcaprolactam (NMC) und 588,0 g (4,027 Mol) 1,4-Dichlorbenzol vorgelegt und auf 214°C erwärmt. Innerhalb von 4 Stunden wird eine Lösung von 249,7 g (3,201 Mol) Natriumsulfid, 89,7 g (1,602 Mol) Natriumhydrogensulfid und 4,0 g (0,0426 Mol) Phenol (=1 Mol% bezogen auf 1,4-Dichlorbenzol) in 367,2 g Wasser (Wassergehalt der Lösung = 51,7 Gew.-%) unter Rühren und azeotroper Entwässerung bei einer Reaktionsgemischtemperatur von 213°C bis 217°C eindosiert. Das Molverhältnis von Mol Schwefelspender (= 4,803 Mol) zu Mol Lösungsmittel (= 7,937 Mol) ist 1:1,653. Das mit dem Wasser azeotrop abdestillierende 1,4-Dichlorbenzol wird kontinuierlich in den Reaktor zurückgeführt. Proben des Reaktionsgemisches werden nach 1, 2, 3, 4

Stunden genommen und der Wassergehalt in einer Methylenchloridsuspension nach K. Fischer bestimmt. Die Wassergehalte sind stets <0,01 Gew.-%.

Anschließend wird die Temperatur des Reaktionsgemisches erhöht und weitere 8 Stunden unter Rückflußsieden erhitzt, wobei die Temperatur des Reaktionsgemisches auf 240 °C ansteigt. Anschließend werden 50 ml N-Methylcaprolactam und 24,5 g 1,4-Dichlorbenzol abdestilliert. Man fällt das Reaktionsgemisch in 7 kg Isopropanol unter Rühren, filtert Salz und Polymer ab, wäscht mit 3 kg Isopropanol zur Entfernung des Lösungsmittels N-Methylcaprolactam nach, suspendiert den Rückstand in 3 kg Wasser und säuert die Suspension mit 70%-iger Schwefelsäure auf pH = 2 an. Das Polymer wird abfiltriert, mit Wasser elektrolytfrei gewaschen und im Vakuum (Druck 50 mbar) bei 120 °C 12 Stunden getrocknet. Ausbeute: 398,9 g (= 95,7%, bezogen auf eingesetztes Dichlorbenzol). Werte für Gew.-% der mit Methylenchlorid extrahierbaren Anteile, Schmelzviskosität, Gehalt an anorganischem Cl sowie Uneinheitlichkeit $U_1$ sind vergleichend in Tabelle 1 zusammengestellt.

## Beispiel 2:

In einem Reaktor wie in Beispiel 1 beschrieben werden unter Stickstoff 972,0 g (7,653 Mol) N-Methylcaprolactam und 882,0 g (6,041 Mol) 1,4-Dichlorbenzol vorgelegt und auf 213 °C erhitzt. Innerhalb von 5 Stunden werden eine 140 °C heiße Lösung von 374,6 g (4,803 Mol) Natriumsulfid, 134,5 g (2,402 Mol) Natriumhydrogensulfid und 4,5 g (0,048 Mol) Phenol (= 0,75 Mol% bezogen auf 1,4-Dichlorbenzol) in 673,2 g Wasser (Wassergehalt der Lösung = 56,7 Gew.-%) bei einer Reaktionstemperatur von 213 °C bis 219 °C unter Rühren und azeotroper Entwässerung zudosiert, das azeotrop mit dem Wasser abdestillierende 1,4-Dichlorbenzol kontinuierlich in das Reaktionsgemisch rückgeführt, wobei Proben des Reaktionsgemisches nach 1, 2, 4, 5 Stunden entnommen werden. Der Wassergehalt der Proben ist kleiner 0,01 Gew.-%. Das Verhältnis von Mol Schwefelspender (7,205 Mol) zu Mol Lösungsmittel (7,653 Mol) ist 1:1,062.

Die Temperatur des Reaktionsgemisches wird innerhalb von 1 Stunde auf 230 °C erhöht,weitere 8 Stunden unter Rückflußsieden erhitzt und anschließend 50 ml N-Methylcaprolactam und 26,2 g 1,4-Dichlorbenzol abdestilliert, wobei das Reaktionsgemisch eine Temperatur von 242 °C erreicht. Das Polymer wird gemäß der in Beispiel 1 beschriebenen Methode isoliert. Man erhält 631 g (Ausbeute = 96,7% bezogen auf eingesetztes Dichlorbenzol) Polyphenylensulfid. Die weiteren bestimmten Werte sind vergleichend in Tabelle 1 zusammengestellt.

## Beispiel 3:

In einem Reaktor wie in Beispiel 1 beschrieben werden unter Stickstoff 972,0 g (7,653 Mol) N-Methylcaprolactam und 882,0 g (6,041 Mol) 1,4-Dichlorbenzol vorgelegt und auf 213 °C erhitzt. Innerhalb von 5 Stunden werden eine 140 °C heiße Lösung von 374,6 g (4,803 Mol) Natriumsulfid, 134,5 g (2,402 Mol) Natriumhydrogensulfid und 2,8 g (0,030 Mol) Phenol (= 0,47 Mol% bezogen auf 1,4-Dichlorbenzol) in 673,2 g Wasser (Wassergehalt der Lösung = 56,7 Gew/-%) bei einer Reaktionstemperatur von 213 °C bis 220 °C unter Rühren und azeotroper Entwässerung zudosiert und wie bei Beispiel 2 weiter verfahren.

Das Verhältnis von Mol Schwefelspender (7,205 Mol) zu Mol Lösungsmittel (7,653 Mol) ist hierbei 1:1,062. In Reaktionsgemischproben nach 2, 4, 6 Stunden wird ein Wassergehalt von kleiner 0,01 Gew.-% bestimmt.

Es werden 40 ml N-Methylcaprolactam und 22 g 1,4-Dichlorbenzol gegen Ende der Reaktion abdestilliert. Man erhält nach analoger Aufarbeitung wie in Beispiel 2 628 g Polyphenylensulfid (Ausbeutet 96,2% bezogen auf eingesetztes 1,4-Dichlorbenzol). Tabelle 1 enthält die weiteren bestimmten Werte.

## Vergleichsbeispiel 1:

(Nicht erfindungsgemäße Variante zum direkten Vergleich)

In einem 4 l Kessel werden wie in Beispiel 1 beschrieben 1.382,4 g (10,885 Mol) N-Methylcaprolactam und 470,4 g (3,222 Mol) 1,4-Dichlorbenzol vorgelegt und auf 214 °C erwärmt. Innerhalb von 4 Stunden wird eine Lösung von 199,8 g (2,562 Mol) Natriumsulfid, 71,8 g (1,282 Mol) Natriumhydrogensulfid und 3,0 g (0,032 Mol) Phenol ( = 1 Mol% bezogen auf 1,4-Dichlorbenzol) in 293,8 g Wasser (Wassergehalt der

Lösung = 51,7 Gew.-%) bei einer Reaktionstemperatur von 214 °C bis 220 °C unter Rühren und azeotroper Entwässerung zudosiert und wie unter Beispiel 1 weiter verfahren.

Das Verhältnis von Mol Schwefelspender (3,844 Mol) zu Mol Lösungsmittel (10,885 Mol) ist hierbei 1:2,84. Der Wassergehalt des Reaktionsgemisches wird nach 1, 2, 3, 5 Stunden mit kleiner 0,1 Gew.-% bestimmt.

Gegen Reaktionsende werden 50 ml N-Methylcaprolactam und 13,8 g 1,4-Dichlorbenzol abdestilliert. Man erhält nach analoger Aufarbeitung wie in Beispiel 1 335,8 g Polyphenylensulfid (Ausbeute 96,5% bezogen auf eingesetztes 1,4-Dichlorbenzol). Tabelle 1 enthält die weiteren bestimmten Werte.

Vergleichsbeispiel 2:

(Nicht erfindungsgemäße Variante zum direkten Vergleich)

Beispiel 4 der EP-A 240 016 wurde in einem 4 l Rührautoklav nachgearbeitet.

Einwaagen:

218,4 g (2,8 Mol) Natriumsulfid 3,46 g (0,0865 Mol) Natriumhydroxid, 840,0 g (7,706 Mol) N-Methylpyrrolidon (NMP), 148,3 g Wasser.

Nach der Dehydratisierung unter Destillation von 312 g wäßrigem NMP (davon 145 g $H_2O$) werden bei 170 °C 411,6 g (2,819 Mol) 1,4-Dichlorbenzol, 0,5 g (2,75 mMol) 1,2,4-Trichlorbenzol und 140,0 g (1,284 Mol) NMP zugegeben und gemäß Beispiel 4 der EP-OS 240 016 verfahren und aufgearbeitet. Das Mol-Verhältnis von Schwefelspender (2,8 Mol) zu Lösungsmittel (7,458 Mol) beträgt hierbei 1:2,66. Man erhält 295,3 g Polyphenylensulfid (Ausbeute 97% bezogen auf eingesetztes 1,4-Dichlorbenzol). Tabelle 1 enthält die bestimmten Werte.

Die Schmelzviskosität des gemäß Vergleichsbeispiel 2 erhaltenen Polyphenylensulfids wurde nicht wie in EP-A 240 016 nach einer Wärmebehandlung an Luft bei 260 °C gemessen (vgl. Meßmethode für die Schmelzviskosität in Beispiel 1 der EP-A 240 016), da diese Methode zu Molgewichtsaufbau infolge Oligomerenverknüpfung führt. Vergleichend zu den Beispielen 1 bis 3 und den Vergleichsbeispielen 1 und 3 der vorliegenden Erfindung wurde die Schmelzviskosität nach Trocknung unter Stickstoff bei 120 °C (12 Stunden, 50 mbar Vakuum) gemessen, so daß ein Vergleich der Polymereigenschaften ohne Verfälschung ermöglicht wird. Der Gewichtsanteil durch mit Methylenchlorid extrahierbaren Anteilen liegt dadurch auch deutlich höher als er im Beispiel 4 der EP-A 240 016 mit 1,3-Gew.-% angegeben wurde, weil eine partielle thermische oxidative Vernetzung niedermolekularer oligomerer Anteile, die den extrahierbaren Anteil reduziert, hier vermieden wird (vgl. Tabelle 1).

Vergleichsbeispiel 3:

(Nicht erfindungsgemäße Variante zum direkten Vergleich)

Beispiel 1 der EP-A 215 259 wurde nachgearbeitet. Das Mol-Verhältnis von Schwefelspender (4,8 Mol) zu Lösungsmittel (2000 ml NMC = 2000 g = 15,748 Mol) beträgt 1:3,28.

Man erhält nach analoger Aufarbeitung wie in Beispiel 1 der vorliegenden Anmeldung 451,4 g Polyphenylsulfid (Ausbeute = 95% bezogen auf eingesetztes 1,4-Dichlorbenzol).

Tabelle 1 enthält die weiteren bestimmten Werte.

Tabelle 1:

| Beispiel | Schmelzviskosität $\eta m$(Pa.s), 360° C | anorgan. Cl (ppm) | Gew.-% extrahierbare Anteile[1)] | $U_1 = \frac{M_w}{M_n} - 1$ | Mol S-Spender Mol Lösungsmittel |
|---|---|---|---|---|---|
| 1 | 40 | <5 | 2,1 | 3,52 | 1 : 1,653 |
| 2 | 58 | <5 | 1,9 | 2,82 | 1 : 1,062 |
| 3 | 80 | <5 | 1,8 | 3,02 | 1 : 1,062 |
| Vgl.bsp. 1 | 44 | <5 | 3,8 | 4,28 | 1 : 2,83 |
| Vgl.bsp. 2 | 6 | 540 | 2,8 | 4,62 | 1 : 2,66 |
| Vgl.bsp. 3 | 22 | <5 | 4,1 | 4,74 | 1 : 3,28 |

[1)] Chromatographische Analyse (HPLC) zeigt, daß es sich um cyclische Phenylensulfidoligomere handelt.

## Ansprüche

1. Verfahren zur Herstellung von hochmolekularen, gegebenenfalls verzweigten Polyarylensulfiden, vorzugsweise Polyphenylensulfiden, aus

a) einem oder mehreren Dihalogen(hetero)aromaten der Formeln (I) und/oder (II),

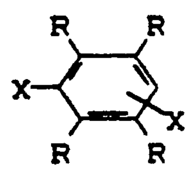 (I), 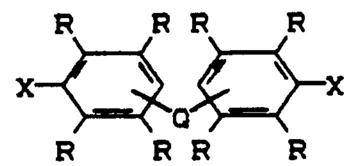 (II),

in denen
X für Halogen wie Chlor oder Brom steht,
R gleich oder verschieden sind und Wasserstoff, $C_1$-$C_{20}$-Alkyl, $C_4$-$C_{20}$-Cycloalkyl, $C_6$-$C_{24}$-Aryl, $C_7$-$C_{24}$-Alkylaryl und $C_7$-$C_{24}$-Arylalkyl sein können, wobei zwei zueinander ortho-ständige Reste R zu einem aromatischen oder heterocyclischen Ring mit bis zu drei Heteroatomen wie N, O oder S verknüpft sein können,
und
Q für eine chemische Bindung, für zweibindige Gruppen wie -Ar-, -O-, -S-, -SO-, $-SO_2-$, $-(CR_2)_m-$, -CO-, -CO-Ar-CO-, -CO-NH-, -CO-NH-Ar-NH-CO-steht,
wobei R die oben angegebene Bedeutung hat, Ar einen zweibindingen $C_6$-$C_{24}$-Aromaten bedeutet, m eine ganze Zahl von 1 bis 24 ist
und

b) 0 bis 5 Mol-%, bevorzugt 0 bis 1,25 Mol-%, bezogen auf die Summe der Dihalogenaromaten der Formel (I) und/oder (II), eines Tri- oder Tetrahalogenaromaten der Formel (III),
$ArX_n$ (III),
in welcher
Ar ein aromatischer oder heterocyclischer Rest mit 6 bis 24 Ringatomen ist, wobei bis zu drei Ring-C-Atomen durch Heteroatome wie N, O, S ersetzt sein können,
X für Halogen wie Brom oder Chlor steht und
n für die Zahlen 3 oder 4 steht,
und

c) 50 bis 100 Mol-% Alkalisulfiden und 0 bis 50 Mol-% Alkalihydrogensulfid, wobei das molare Verhältnis von (a + b) : c im Bereich von 0,75:1 bis 1,15:1, vorzugsweise 0,90:1 bis 1,1:1 liegt,

d) in einem organischen Lösungsmittel, gegebenenfalls unter Mitverwendung von Katalysatoren und/oder Cosolventien, dadurch gekennzeichnet, daß das molare Verhältnis von c) zu dem organischen Lösungsmittel d) im Bereich von 1:1,9 bis 1:1,0, vorzugsweise im Bereich von 1:1,8 bis 1:1,3 liegt, daß die

Umsetzung durch Vermischen von wasserhaltigem Alkalisulfid und/oder Alkalihydrogensulfid-Lösungen mit Lösungen der Dihalogenaromaten in einem organischen Lösungsmittel bei Temperaturen oberhalb 212° C erfolgt, der Wassergehalt der Reaktionslösung 0,02 Gew-% nicht überschreitet und nicht umgesetzte Halogenaromaten der Formeln (I), (II) und (III) kontinuierlich oder zum Ende der Reaktion aus dem Reaktionsgemisch entfernt werden.

2. Verfahren nach Anspruch 1, dadurch gekennzeichnet, daß als organisches Lösungsmittel N-Methylpyrrolidon verwendet wird.

3. Verfahren nach Anspruch 1, dadurch gekennzeichnet, daß als organisches Lösungsmittel N-Methylcaprolactam verwendet wird.

4. Verfahren nach Anspruch 1, dadurch gekennzeichnet, daß als organisches Lösungsmittel N,N′-Dimethylpropylenharnstoff verwendet wird.

5. Verfahren nach Anspruch 1, dadurch gekennzeichnet, daß als Dihalogenaromaten der Formel (I) 1,4-Dichlorbenzol, 1,3-Dichlorbenzol und/oder 2,5-Dichlortoluol verwendet wird.

6. Verfahren nach Anspruch 1, dadurch gekennzeichnet, daß als Dihalogenaromaten der Formel (II) 4,4′-Dichlordiphenyl, 4,4′-Dichlordiphenylsulfon und/oder 4,4′-Dichlorbenzophenon verwendet wird.

7. Verfahren nach Anspruch 1, dadurch gekennzeichnet, daß die mit dem Wasser azeotrop abdestillierenden Polyhalogenaromaten der Formel (I), (II) und/oder (III) kontinuierlich solange in das Reaktionsgemisch zurückgeführt werden, solange die wasserhaltigen Alkalisufid- und/oder Alkalihydrogensulfidlösungen bei Temperaturen oberhalb 212° C in die Reaktionslösung eingetragen werden und solange die damit verbundene azeotrope Entwässerung des Reaktionsgemisches abläuft.

8. Polyarylensulfide, hergestellt nach dem Verfahren des Anspruchs 1, dadurch gekennzeichnet, daß sie ohne weitere extraktive und thermisch oxidative Vorbehandlungen Gehalte von kleiner 2,1 Gew.-% an mit Dichlormethan extrahierbaren Oligomeren enthalten.